# EUROPEAN PATENT APPLICATION

(11) **EP 4 814 075 A1**
(43) Date of publication of application: **30.09.2026**
(21) Application number: 24893201.4
(22) Date of filing: 31.10.2024
(51) Int. Cl.: C09J 197/00, C08F 290/00, C08F 220/20

(54) **LIGNIN-BASED ACRYLATE PREPOLYMER, COMPOSITE PREPOLYMER, ADHESIVE COMPOSITION, PREPARATION METHOD, AND USE**

(30) Priority: 23.11.2023 CN 202311571929
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: ZHANG, Nan, Beijing 100013 (CN); FANG, Zhao, Beijing 100013 (CN); SHI, Liwang, Beijing 100013 (CN); ZHU, Lunyu, Beijing 100013 (CN); DU, Chao, Beijing 100013 (CN); ZHANG, Lichao, Beijing 100013 (CN); ZHOU, Tong, Beijing 100013 (CN); LIU, Xi, Beijing 100013 (CN)
(74) Representative: karo IP
(86) International application number: PCT/CN2024/129143
(87) International publication number: WO 2025/108043

(57) **Abstract**

The present disclosure is directed to a lignin-based acrylate prepolymer, a composite prepolymer comprising the lignin-based acrylate prepolymer, an adhesive composition containing the composite prepolymer comprising the lignin-based acrylate prepolymer, and preparation methods and use thereof. The adhesive according to the present disclosure has high adhesion strength, low volume shrinkage, good flexibility and chemical resistance, and advantages such as low-cost, readily available raw materials and environmental friendliness, and has potential for industrial application.

## Description

### TECHNICAL FIELD

The present disclosure relates to the technical field of bio-based adhesives, and more specifically to a lignin-based acrylate prepolymer, a composite prepolymer, an adhesive composition, and preparation methods and use thereof.

### BACKGROUND ART

Acrylate adhesives are widely used in fields such as optoelectronic devices, building materials, and medical materials due to their excellent adhesive properties and curing characteristics.

The composition of acrylate adhesives typically includes, besides acrylic (acrylate) functional monomers, oligomers (prepolymers) containing unsaturated functional groups, whose properties essentially determine the main properties of the cured material. Generally, prepolymers having a larger molecular weight leads to lower volume shrinkage and faster curing speed during curing. However, a larger molecular weight may cause an increase in system viscosity, thus requiring more monomers for dilution. Therefore, the selection of prepolymers is a crucial part of adhesive formulation design.

Traditional acrylate adhesives or prepolymers primarily rely on non-renewable petrochemical resources. The production process of these raw materials generates harmful substances, and petrochemical-based prepolymers are difficult to degrade, having a relatively large environmental impact. Due to the limited nature of these resources, reliance on them for production also does not meet the requirements of sustainable development. Therefore, exploring and developing new adhesives and their environmentally friendly raw materials is key to promoting the green and sustainable development of the adhesive industry and has become one of the research hotspots in the adhesive field.

Compared with fossil fuels, biomass resources such as lignin, starch, cellulose, and protein have wide sources, abundant reserves, and are renewable. They are easily degraded and re-enter the natural cycle, enabling zero emissions of greenhouse gases such as carbon dioxide, meeting the requirements of environmentally friendly materials. They hold great potential in replacing petrochemical resources such as petroleum, coal, and natural gas and supporting the green and sustainable development of industry. Using biomass as a raw material is a favorable measure to actively promote the achievement of carbon peak and carbon neutrality goals. Lignin is commonly found in plant cell walls and is the second most abundant (after cellulose) green renewable resource in nature. The paper and bioethanol industries alone produce tens of millions of tons of lignin annually. Moreover, lignin contains many highly polar reactive groups, making it easy to modify according to requirements.

Although bio-based acrylate adhesives have significant advantages in terms of environmental friendliness, their performance still needs further improvement to meet the demands of practical applications. Particularly in terms of adhesive strength, volume shrinkage rate, and weather resistance, they need to meet or even exceed the standards of traditional acrylate adhesives.

Therefore, there is a need in the field to develop a bio-based acrylate adhesive system with high adhesive strength, low volume shrinkage rate, and excellent weather resistance.

### SUMMARY

To solve the above-mentioned problems in the prior art, the present disclosure provides a lignin-based acrylate prepolymer, a composite prepolymer, a novel adhesive composition, and preparation methods and use thereof. According to the present disclosure, lignin is subjected to acrylated modification, polymerized with a polyfunctional crosslinking agent generated after modification of gallic acid to form a lignin-based acrylate prepolymer; the lignin-based acrylate prepolymer is mixed with a polyurethane acrylate prepolymer to form a composite prepolymer; and the composite prepolymer is applied in the preparation of the novel adhesive composition. This can effectively realize the value-added utilization of lignin, yielding a bio-based acrylate adhesive system with high adhesive strength, low volume shrinkage rate, and excellent weather resistance.

More specifically, the present disclosure solves the above technical problems through the following aspects.

In a first aspect, the present disclosure provides a lignin-based acrylate prepolymer comprising a crosslinked backbone and linking groups connecting the crosslinked backbone, wherein the crosslinked backbone comprises polymerized structural units derived from at least one acrylic-functionalized lignin, and the linking groups are derived from at least one polyfunctional gallate having at least three terminal vinyl groups.

In a second aspect, the present disclosure provides a method for preparing the lignin-based acrylate prepolymer according to the first aspect. The method comprises steps of: mixing starting materials comprising at least one acrylic-functionalized lignin, at least one polyfunctional gallate having at least three terminal vinyl groups, a first initiator, and optionally a co-initiator under vacuum, followed by heating to carry out a reaction, to obtain the lignin-based acrylate prepolymer.

In a third aspect, the present disclosure provides a composite prepolymer comprising a polyurethane acrylate prepolymer, a lignin-based acrylate prepolymer, and optionally an inhibitor; wherein the lignin-based acrylate prepolymer is as defined in the first aspect of the present disclosure or obtained by the preparation method according to the second aspect of the present disclosure.

In a fourth aspect, the present disclosure provides an adhesive composition comprising a polymerizable monomer, a second initiator, the composite prepolymer according to the third aspect of the present disclosure, a coupling agent, and optionally an auxiliary agent.

In a fifth aspect, the present disclosure provides a method for preparing the adhesive composition according to the fourth aspect of the present disclosure. The method comprises steps of:
a) mixing a polyurethane acrylate prepolymer, a lignin-based acrylate prepolymer, and optionally an inhibitor in absence of light to obtain a composite prepolymer; and
b) mixing a polymerizable monomer, a second initiator, the composite prepolymer, a coupling agent, and optionally an auxiliary agent under vacuum and in absence of light to obtain the adhesive composition.

In a sixth aspect, the present disclosure provides use of the adhesive composition according to the fourth aspect of the present disclosure in bonding for optoelectronic devices, building materials, and medical materials.

The adhesive composition provided by the present disclosure, by introducing a composite prepolymer comprising a lignin-based acrylate prepolymer, enables the prepared bio-based acrylate adhesive to have excellent adhesive properties, anti-volume shrinkage properties, and weather resistance properties. Moreover, the present disclosure introduces the biomass lignin material, reduces industrial costs, allows the product to be easily degraded after disposal, meets the requirements of environmental friendliness, and has potential for industrial application.

Thus, the present disclosure provides a lignin-based acrylate prepolymer and a composite prepolymer comprising the same, as well as a novel adhesive composition containing the composite prepolymer comprising the lignin-based acrylate prepolymer. This adhesive has high adhesive strength, low volume shrinkage rate, good flexibility and chemical resistance, and advantages such as low-cost, readily available raw materials, and environmental friendliness.

Additional features and advantages of the present application will be described in detail in the subsequent detailed description section.

### BRIEF DESCRIPTION OF THE DRAWINGS

The accompanying drawings are provided for a further understanding of the present application and constitute a part of the description. Together with the following specific embodiments, they are used to explain the present application but do not constitute a limitation to the present application. In the accompanying drawings:
Figure 1 shows the ¹H nuclear magnetic resonance (NMR) spectra of (A) kraft lignin and (B) methacrylated lignin.
Figure 2 shows the Fourier transform infrared (FT-IR) spectra of (A) kraft lignin and (B) methacrylated lignin.
Figure 3 shows the ¹H NMR spectra of (C) gallic acid and (D) allylated gallic acid triacrylate.
Figure 4 shows the FT-IR spectra of (C) gallic acid and (D) allylated gallic acid triacrylate.
Figure 5 shows the FT-IR spectrum of the lignin-based acrylate prepolymer.

### DETAILED DESCRIPTION

The specific embodiments of the present application are described in detail below. However, it should be noted that the scope of protection of the present application is not limited by these specific embodiments, but is determined by the appended claims.

Except for the example section, any specific numerical values disclosed herein (including endpoints of numerical ranges) are not limited to the precise value but should be understood to also encompass values close to that precise value, such as all possible values within a range of ±5% of that precise value. Furthermore, for disclosed numerical ranges, one or more new numerical ranges can be obtained by arbitrary combination between the endpoint values of the range, between endpoint values and specific point values within the range, and between various specific point values. These new numerical ranges should also be considered as specifically disclosed herein.

Unless otherwise stated, the terms used herein have the same meanings as commonly understood by those skilled in the art. If a term is defined herein and its definition differs from the common understanding in the field, the definition herein prevails.

In the present application, except for explicitly stated content, any matter or item not mentioned directly applies to known aspects in the field without any change. Moreover, any embodiment described herein may be freely combined with one or more other embodiments described herein, and the technical solutions or ideas formed thereby are considered as part of the original disclosure or original record of the present application and should not be considered as new content not disclosed or anticipated herein, unless those skilled in the art consider such combination obviously unreasonable.

The expression "comprises" or "includes" in the present application should be interpreted as including all specifically mentioned features as well as optional, additional, unspecified features. As used herein, the use of the term "comprises" also discloses schemes where no other features besides the specifically mentioned features are present, such as the expressions "consisting essentially of..." and "consisting of...".

All patents and non-patent documents mentioned herein, including but not limited to textbooks and journal articles, are incorporated herein by reference in their entirety.

In a first aspect, the present disclosure provides a lignin-based acrylate prepolymer comprising a crosslinked backbone and linking groups connecting the crosslinked backbone, wherein the crosslinked backbone comprises polymerized structural units derived from at least one acrylic-functionalized lignin, and the linking groups are derived from at least one polyfunctional gallate having at least three terminal vinyl groups;
wherein the acrylic-functionalized lignin contains structural fragments as follows: 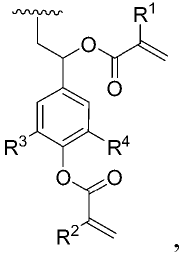
wherein R¹ and R² each independently represent H or C1-2 alkyl; R³ and R⁴ each independently represent H, -OCH₃, or a linking bond connected to other structural fragments of the acrylic-functionalized lignin.

According to some embodiments of the present disclosure, the acrylic-functionalized lignin is selected from at least one of acrylated lignin, methacrylated lignin, and ethylacrylated lignin. According to a preferable embodiment of the present disclosure, the acrylic-functionalized lignin is methacrylated lignin, which contains structural fragments as follows:

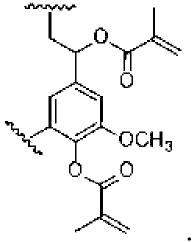

The structure of lignin used in the present disclosure is relatively complex; the above structure only indicates the main reactive fragments; the parts where broken bonds are not annotated represent the remaining structure of lignin, such as kraft lignin. The lignin structure is an amorphous polymer comprising p-coumaryl alcohol monomers, coniferyl alcohol monomers, and sinapyl alcohol monomers. The structures of these three alcohol monomers are as follows:

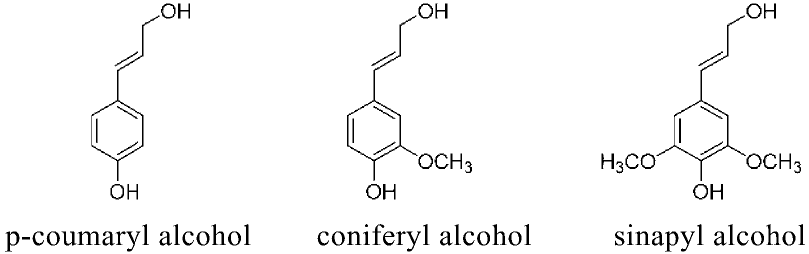

According to some embodiments of the present disclosure, the lignin is selected from at least one of alkali lignin, lignosulfonate, kraft lignin, sulfonated alkali lignin, and aminated alkali lignin.

According to some embodiments of the present disclosure, the lignin has a weight-average molecular weight M_{w} of about 800-10000 g/mol, preferably about 1000-8000 g/mol, more preferably about 2000-5000 g/mol. For example, in some embodiments, the lignin may have a weight-average molecular weight M_{w} of about 800 g/mol, about 1000 g/mol, about 1500 g/mol, about 2000 g/mol, about 2500 g/mol, about 3000 g/mol, about 3500 g/mol, about 4000 g/mol, about 4500 g/mol, about 5000 g/mol, about 6000 g/mol, about 6500 g/mol, about 7000 g/mol, about 7500 g/mol, about 8000 g/mol, about 8500 g/mol, about 9000 g/mol, about 9500 g/mol, about 10000 g/mol, or within a range composed of any two of the above values.

According to some embodiments of the present disclosure, 30% or more, preferably 50% or more, more preferably 70% or more, and 100% or less, preferably 90% or less, more preferably 80% or less of hydroxyl groups of the lignin are acrylic-functionalized, preferably methacrylic-functionalized.

According to some embodiments of the present disclosure, the polyfunctional gallate is selected from at least one of gallic acid triacrylate, gallic acid trimethacrylate, allylated gallic acid triacrylate, and allylated gallic acid trimethacrylate.

According to a preferable embodiment of the present disclosure, the polyfunctional gallate is a tetrafunctional gallate, preferably having the following structure:

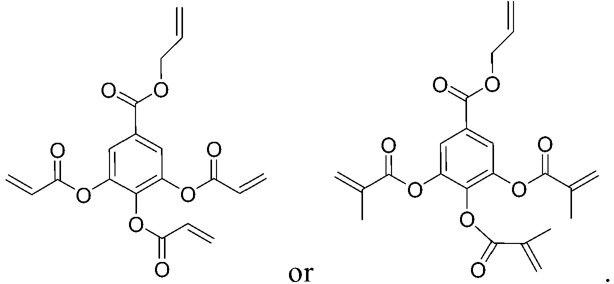

According to some embodiments of the present disclosure, with respect to the total weight of the lignin-based acrylate prepolymer as 100 wt%, the polymerized structural units derived from the acrylic-functionalized lignin is present in an amount ranging from 72 wt% to 93 wt%, preferably from 80 wt% to 91 wt%; the groups derived from the polyfunctional gallate is present in an amount ranging from 5 wt% to 20 wt%, preferably from 5 wt% to 16 wt%. For example, in some embodiments, with respect to the total weight of the lignin-based acrylate prepolymer as 100 wt%, the polymerized structural units derived from the acrylic-functionalized lignin may be present in an amount of 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, or within a range composed of any two of the above values. In some embodiments, with respect to the total weight of the lignin-based acrylate prepolymer as 100 wt%, the groups derived from the polyfunctional gallate may be present in an amount of 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, or within a range composed of any two of the above values.

According to some embodiments of the present disclosure, the lignin-based acrylate prepolymer has a viscosity ranging from 5000 to 50000 mPa·s, preferably from 10000 to 45000 mPa·s. For example, in some embodiments, the lignin-based acrylate prepolymer may have a viscosity of 5000 mPa·s, 6000 mPa·s, 7000 mPa·s, 8000 mPa·s, 9000 mPa·s, 10000 mPa·s, 15000 mPa·s, 20000 mPa·s, 25000 mPa·s, 30000 mPa·s, 35000 mPa·s, 40000 mPa·s, 45000 mPa·s, 50000 mPa·s, or within a range composed of any two of the above values.

According to some embodiments of the present disclosure, the lignin-based acrylate prepolymer has a weight-average molecular weight ranging from 40000 to 250000 g/mol. For example, in some embodiments, the lignin-based acrylate prepolymer may have a weight-average molecular weight M_{w} of 40000 g/mol, 50000 g/mol, 60000 g/mol, 70000 g/mol, 80000 g/mol, 90000 g/mol, 100000 g/mol, 110000 g/mol, 120000 g/mol, 130000 g/mol, 140000 g/mol, 150000 g/mol, 160000 g/mol, 170000 g/mol, 180000 g/mol, 190000 g/mol, 200000 g/mol, 210000 g/mol, 220000 g/mol, 230000 g/mol, 240000 g/mol, 250000 g/mol, or within a range composed of any two of the above values.

According to some embodiments of the present disclosure, the lignin-based acrylate prepolymer is obtained by mixing starting materials comprising at least one acrylic-functionalized lignin, at least one polyfunctional gallate having at least three terminal vinyl groups, a first initiator, and optionally a co-initiator under vacuum, followed by heating to carry out a reaction.

In a second aspect, the present disclosure provides a method for preparing a lignin-based acrylate prepolymer, preferably a method for preparing the lignin-based acrylate prepolymer according to the first aspect of the present disclosure. The method comprises steps of:
mixing at least one acrylic-functionalized lignin, at least one polyfunctional gallate having at least three terminal vinyl groups, a first initiator, and optionally a co-initiator under vacuum, followed by heating to carry out a reaction, to obtain the lignin-based acrylate prepolymer.

According to some embodiments of the present disclosure, the first initiator is a thermal initiator. The thermal initiator is preferably selected from at least one of peroxide compounds and/or azo compounds, more preferably selected from at least one of azobis(isobutyronitrile) (2,2'-azobis(2-methylpropionitrile)), azobis(isovaleronitrile) (2,2'-azobis(2-methylbutyronitrile)), azobis(isoheptanonitrile) (2,2'-azobis(2,4-dimethylvaleronitrile)), dimethyl azobis(isobutyrate) (dimethyl 2,2'-azobis(2-methylpropionate)), 1-((cyano-1-methylethyl)azo)formamide, 1,1'-azobis(cyclohexanecarbonitrile), dimethyl azobis(isobutyrate), benzoyl peroxide, tert-butyl peroxybenzoate, dicumyl peroxide, lauroyl peroxide, diisopropyl peroxydicarbonate, tert-butyl peroxy-2-ethylhexanoate, and methyl ethyl ketone peroxide, most preferably selected from at least one of azobis(isobutyronitrile), azobis(isoheptanonitrile), benzoyl peroxide, tert-butyl peroxybenzoate, and methyl ethyl ketone peroxide.

According to some embodiments of the present disclosure, the co-initiator is selected from at least one of iso-octyl p-dimethylaminobenzoate, diethanolamine, and triethanolamine.

According to some embodiments of the present disclosure, the reaction is carried out under one or more of the following conditions:
a reaction temperature ranging from 40 to 70°C, for example, the reaction temperature may be 40°C, 50°C, 60°C, 70°C, or within a range composed of any two of the above values;
a reaction time ranging from 0.5 h to 3 h, for example, the reaction time may be 0.5 h, 1 h, 2 h, 3 h, or within a range composed of any two of the above values;
a vacuum degree ranging from -0.1 MPa to -0.005 MPa, for example, the vacuum degree may be -0.1 MPa, -0.05 MPa, -0.02 MPa, -0.01 MPa, -0.005 MPa, or within a range composed of any two of the above values.

According to some embodiments of the present disclosure, with respect to the total weight of the starting materials as 100 wt%,
the acrylic-functionalized lignin is used in an amount ranging from 72 wt% to 93 wt%, preferably from 80 wt% to 91 wt%, for example, the amount of the acrylic-functionalized lignin may be 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, 90 wt%, 91 wt%, 92 wt%, 93 wt%, or within a range composed of any two of the above values;
the polyfunctional gallate is used in an amount ranging from 5 wt% to 20 wt%, preferably from 5 wt% to 16 wt%, for example, the amount of the polyfunctional gallate may be 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, or within a range composed of any two of the above values;
the first initiator is used in an amount ranging from 1 wt% to 5 wt%, preferably from 2 wt% to 4 wt%;
the co-initiator is used in an amount ranging from 0.5 wt% to 3 wt%, preferably from 1 wt% to 2 wt%.

In a third aspect, the present disclosure provides a composite prepolymer comprising a polyurethane acrylate prepolymer, a lignin-based acrylate prepolymer, and optionally an inhibitor; wherein the lignin-based acrylate prepolymer is as defined in the first aspect of the present disclosure or obtained by the preparation method according to the second aspect of the present disclosure.

According to some embodiments of the present disclosure, the polyurethane acrylate prepolymer is a di- to hexa-functional aliphatic polyurethane acrylate or aromatic polyurethane acrylate, preferably a difunctional aliphatic polyurethane acrylate.

According to some embodiments of the present disclosure, the polyurethane acrylate prepolymer has a viscosity ranging from 5000 to 40000 mPa·s, preferably from 10000 to 30000 mPa·s, for example, 5000 mPa·s, 6000 mPa·s, 7000 mPa·s, 8000 mPa·s, 9000 mPa·s, 10000 mPa·s, 15000 mPa·s, 20000 mPa·s, 25000 mPa·s, 30000 mPa·s, 35000 mPa·s, 40000 mPa·s, or within a range composed of any two of the above values. In some embodiments, the polyurethane acrylate prepolymer used in the present disclosure is commercially available, for example, at least one of Etercure 6164 L and Etercure 615-100 commercially available from Eternal Materials Co., Ltd.

According to some embodiments of the present disclosure, the inhibitor is selected from at least one of hydroquinone, tert-butylcatechol, p-methoxyphenol, and benzoquinone.

According to some embodiments of the present disclosure, with respect to the total weight of the composite prepolymer as 100 wt%,
the lignin-based acrylate prepolymer is present in an amount ranging from 20 wt% to 77 wt%, preferably from 33 wt% to 66 wt%; for example, the lignin-based acrylate prepolymer may be present in an amount of 20 wt%, 25 wt%, 30 wt%, 35 wt%, 40 wt%, 45 wt%, 50 wt%, 55 wt%, 60 wt%, 65 wt%, 70 wt%, 75 wt%, 77 wt%, or within a range composed of any two of the above values;
the polyurethane acrylate prepolymer is present in an amount ranging from 20 wt% to 77 wt%, preferably from 33 wt% to 66 wt%; for example, the polyurethane acrylate prepolymer may be present in an amount of 20 wt%, 25 wt%, 30 wt%, 35 wt%, 40 wt%, 45 wt%, 50 wt%, 55 wt%, 60 wt%, 65 wt%, 70 wt%, 75 wt%, 77 wt%, or within a range composed of any two of the above values;
the inhibitor is present in an amount ranging from 0 wt% to 3 wt%, preferably from 1 wt% to 2 wt%;
the weight ratio of the lignin-based acrylate prepolymer to the polyurethane acrylate prepolymer ranges from 3.85:1 to 1:3.85, preferably from 2:1 to 1:2. In some embodiments, the weight ratio of the lignin-based acrylate prepolymer to the polyurethane acrylate prepolymer may be 3.85:1, 3.5:1, 3:1, 2.5:1, 2:1, 1.5:1, 1:1, 1:1.5, 1:2, 1:2.5, 1:3, 1:3.5, 1:3.85, or within a range composed of any two of the above values.

In a fourth aspect, the present disclosure provides an adhesive composition comprising a polymerizable monomer, a second initiator, the composite prepolymer according to the third aspect of the present disclosure, a coupling agent, and optionally an auxiliary agent.

According to some embodiments of the present disclosure, the component contents in the adhesive composition are, in parts by weight:
polymerizable monomer: 100 parts;
second initiator: 1-6 parts;
composite prepolymer: 15-40 parts, preferably 19-35 parts;
coupling agent: 1-6 parts;
auxiliary agent: 0-10 parts, preferably 4-8 parts.

According to some embodiments of the present disclosure, the polymerizable monomer comprises at least one of acrylic acid monomers and acrylate monomers.

The acrylic acid monomer is selected from at least one of acrylic acid and methacrylic acid; and/or,
The acrylate monomer is selected from at least one of methyl methacrylate, ethyl methacrylate, butyl methacrylate, octyl methacrylate, hydroxyethyl methacrylate, hydroxypropyl methacrylate, butyl acrylate, iso-octyl acrylate, hydroxypropyl acrylate, glycidyl acrylate, tripropylene glycol diacrylate, trifluoroethyl methacrylate, methyl cyanoacrylate, ethyl cyanoacrylate, hydroxyethyl cyanoacrylate, and hydroxypropyl cyanoacrylate.

According to some embodiments of the present disclosure, the second initiator is a photoinitiator; preferably, the photoinitiator is selected from at least one of anisoin methyl ether, anisoin ethyl ether, anisoin butyl ether, benzil, diethylamino benzil, benzophenone sulfonates, dialkoxyacetophenones (e.g., dimethoxyacetophenone), α-hydroxyalkyl phenones (e.g., 2-hydroxy-2-methyl-1-phenyl-1-propanone) and α-amino ketone compounds, benzophenone, and thioxanthone; preferably, the α-amino ketone compound is selected from at least one of 2-benzyl-2-dimethylamino-1-(4-morpholinophenyl)-1-butanone and 2-methyl-1-(4-methylthiophenyl)-2-morpholino-1-propanone.

According to some embodiments of the present disclosure, the coupling agent is selected from silane coupling agents; preferably, the silane coupling agent is selected from trialkoxysilane coupling agents; more preferably, the silane coupling agent is selected from at least one of phenyltrimethoxysilane, phenyltriethoxysilane, γ-mercaptopropyltriethoxysilane, methyltriethoxysilane, and γ-aminopropyltriethoxysilane.

According to some embodiments of the present disclosure, the auxiliary agent is selected from at least one of a co-initiator, a stabilizer, and an inhibitor.

According to some embodiments of the present disclosure, the co-initiator is selected from at least one of iso-octyl p-dimethylaminobenzoate, diethanolamine, and triethanolamine.

According to some embodiments of the present disclosure, the stabilizer is selected from at least one of borate esters and organic acids; preferably, the stabilizer is selected from at least one of trimethyl borate, triethyl borate, tri-n-propyl borate, tri-iso-propyl borate, tri-o-tolyl borate, tri-m-benzyl borate, barbituric acid, salicylic acid, lauric acid, fumaric acid, and benzoic acid.

According to some embodiments of the present disclosure, the inhibitor is selected from at least one of hydroquinone, tert-butylcatechol, p-methoxyphenol, and benzoquinone.

In a fifth aspect, the present disclosure provides a method for preparing an adhesive composition, preferably a method for preparing the adhesive composition according to the fourth aspect of the present disclosure. The method comprises steps of:
a) mixing a polyurethane acrylate prepolymer, a lignin-based acrylate prepolymer, and optionally an inhibitor in absence of light to obtain a composite prepolymer;
b) mixing a polymerizable monomer, a second initiator, the composite prepolymer, a coupling agent, and optionally an auxiliary agent under vacuum and in absence of light to obtain the adhesive composition.

According to the present disclosure, "in absence of light" refers to conditions avoiding intense light, particularly ultraviolet (UV) light irradiation, thereby preventing premature initiation of the reaction and affecting the performance of the adhesive composition. The method of avoiding light is not particularly limited and can be a conventional choice in the field as long as it achieves the object of the present disclosure. For example, light-shielding containers or operation in a darkroom can be used.

According to some embodiments of the present disclosure, in step b), the polymerizable monomer, composite prepolymer, coupling agent, and optional auxiliary agent are added first and mixed uniformly, then the second initiator is added and mixed under vacuum stirring conditions in absence of light.

According to some embodiments of the present disclosure, the method is carried out under one or more of the following conditions:
a vacuum degree ranging from -0.1 MPa to -0.005 MPa, for example, the vacuum degree may be -0.1 MPa, -0.05 MPa, -0.02 MPa, -0.01 MPa, -0.005 MPa, or within a range composed of any two of the above values;
a mixing time ranging from 1 to 2 hours, for example, the mixing time may be 1 h, 1.5 h, 2 h, or within a range composed of any two of the above values;
a stirring speed for mixing ranging from 300 to 600 rpm, for example, the stirring speed may be 300 rpm, 400 rpm, 450 rpm, 500 rpm, 550 rpm, 600 rpm, or within a range composed of any two of the above values.

In a sixth aspect, the present disclosure provides use of the adhesive composition according to the fourth aspect of the present disclosure in bonding for optoelectronic devices, building materials, and medical materials.

In a seventh aspect, the present disclosure provides a method for bonding using the adhesive composition according to the fourth aspect of the present disclosure, comprising curing the adhesive composition under ultraviolet light. The curing is preferably carried out under conditions of a LED light source of 365 nm, 100 mW/cm², and irradiation for 15-20 s.

Compared with the prior art, the present disclosure has at least the following advantages:
The present disclosure utilizes the convenient operation, firm bonding, and good chemical resistance of a one-component acrylate curing adhesive system, and further introduces into the system a biomass material-lignin-based acrylate prepolymer, which has an interpenetrating network structure, strengthening the wetting effect and chemical bonding of the adhesive. After curing, it exhibits high bonding strength, low volume shrinkage, and excellent weather resistance. The present disclosure realizes effective utilization of lignin, reduces production costs, conforms to the concept of green environmental protection and environmental friendliness, and has excellent industrial prospects.

The bonding system obtained by the present disclosure meets the strength and bonding performance requirements for use in the bonding of optoelectronic devices, building materials, and medical materials. Additionally, the addition of the degradable and biocompatible lignin-based acrylate prepolymer makes it particularly suitable for application in the bonding of medical materials.

The present application also provides the following embodiments:
1. A lignin-based acrylate prepolymer, characterized in that:
   the lignin-based acrylate prepolymer is prepared from starting materials including methacrylated lignin and a gallic acid-based crosslinking agent;
   wherein the methacrylated lignin contains structural fragments as follows: 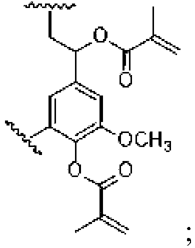
   the gallic acid-based crosslinking agent has the following structure: 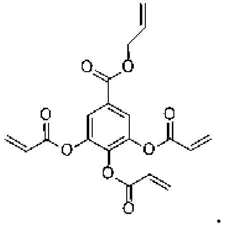
2. A method for preparing a lignin-based acrylate prepolymer, characterized in that:
   the lignin-based acrylate prepolymer is prepared by mixing starting materials including methacrylated lignin and a gallic acid-based crosslinking agent under the action of an initiator and a co-initiator and under vacuum, followed by heating to carry out a reaction;
   preferably for preparing the lignin-based acrylate prepolymer according to embodiment 1.
3. The method for preparing a lignin-based acrylate prepolymer according to embodiment 2, characterized in that:
   the initiator is selected from thermal initiators, preferably selected from at least one of azobis(isobutyronitrile), azobis(isoheptanonitrile), benzoyl peroxide, tert-butyl peroxybenzoate, methyl ethyl ketone peroxide; and/or,
   the co-initiator is selected from at least one of iso-octyl p-dimethylaminobenzoate, diethanolamine, and triethanolamine; and/or,
   the vacuum heating reaction is carried out at a temperature ranging from 40 to 70°C; and/or,
   the vacuum heating reaction is carried out for a time ranging from 0.5 h to 3 h; and/or,
   the vacuum heating reaction is carried out under a vacuum degree ranging from -0.1 MPa to -0.01 MPa; and/or,
   with respect to the total weight of the starting materials as 100%,
   the methacrylated lignin is added in an amount ranging from 72 wt% to 93 wt%;
   the gallic acid-based crosslinking agent is added in an amount ranging from 5 wt% to 20 wt%;
   the initiator is added in an amount ranging from 1 wt% to 5 wt%;
   the co-initiator is added in an amount ranging from 0.5 wt% to 3 wt%;
   preferably,
   the methacrylated lignin is added in an amount ranging from 80 wt% to 91 wt%;
   the gallic acid-based crosslinking agent is added in an amount ranging from 5 wt% to 16 wt%;
   the initiator is added in an amount ranging from 2 wt% to 4 wt%;
   the co-initiator is added in an amount ranging from 1 wt% to 2 wt%.
4. A composite prepolymer, characterized in that it is a mixture formed from starting materials including a polyurethane acrylate, a lignin-based acrylate prepolymer, and an inhibitor; wherein the lignin-based acrylate prepolymer is as defined in embodiment 1 or obtained by the preparation method according to embodiment 2 or 3.
5. The composite prepolymer according to embodiment 4, characterized in that,
   the polyurethane acrylate has a viscosity ranging from 5000 to 30000 cps; and/or,
   the inhibitor is selected from at least one of hydroquinone, tert-butylcatechol, p-methoxyphenol, and benzoquinone; and/or,
   with respect to the total weight of the starting materials as 100%,
   the lignin-based acrylate is added in an amount ranging from 20 wt% to 77 wt%;
   the polyurethane acrylate is added in an amount ranging from 20 wt% to 77 wt%;
   the inhibitor is added in an amount ranging from 1 wt% to 3 wt%;
   preferably,
   the lignin-based acrylate is added in an amount ranging from 33 wt% to 66 wt%;
   the polyurethane acrylate is added in an amount ranging from 33 wt% to 66 wt%;
   the inhibitor is added in an amount ranging from 1 wt% to 2 wt%.
6. A method for preparing the composite prepolymer according to any one of embodiments 4-5, characterized in that, the composite prepolymer is prepared by mixing starting materials including the polyurethane acrylate, lignin-based acrylate prepolymer, and inhibitor in absence of light until uniform.
7. A UV adhesive containing a lignin-based acrylate prepolymer, characterized in that:
   the UV adhesive containing a lignin-based acrylate prepolymer comprises a monomer, a photoinitiator, the composite prepolymer according to any one of embodiments 4-5, a coupling agent, and an auxiliary agent;
   the monomer is selected from at least one of acrylic acid monomers and acrylate monomers.
8. The UV adhesive containing a lignin-based acrylate prepolymer according to embodiment 7, characterized in that:
   in the UV adhesive, in parts by weight:
   monomer: 100 parts;
   photoinitiator: 1-6 parts;
   composite prepolymer: 19-40 parts; preferably 20-35 parts;
   coupling agent: 1-6 parts;
   auxiliary agent: 1-8 parts; preferably 4-7 parts.
9. The UV adhesive containing a lignin-based acrylate prepolymer according to embodiment 7, characterized in that:
   the acrylic acid monomer is selected from at least one of acrylic acid and methacrylic acid; and/or,
   the acrylate monomer is selected from at least one of methyl methacrylate, ethyl methacrylate, butyl methacrylate, octyl methacrylate, hydroxyethyl methacrylate, hydroxypropyl methacrylate, butyl acrylate, iso-octyl acrylate, hydroxypropyl acrylate, glycidyl acrylate, tripropylene glycol diacrylate, trifluoroethyl methacrylate, methyl cyanoacrylate, ethyl cyanoacrylate, hydroxyethyl cyanoacrylate, hydroxypropyl cyanoacrylate.
10. The UV adhesive containing a lignin-based acrylate prepolymer according to embodiment 7, characterized in that:
   the photoinitiator is selected from at least one of anisoin methyl ether, anisoin ethyl ether, anisoin butyl ether, benzil, diethylamino benzil, benzophenone sulfonates, dialkoxyacetophenones, α-hydroxyalkyl phenones and α-amino ketone compounds, benzophenone, and thioxanthone; preferably, the α-amino ketone compound is selected from at least one of 2-benzyl-2-dimethylamino-1-(4-morpholinophenyl)-1-butanone and 2-methyl-1-(4-methylthiophenyl)-2-morpholino-1-propanone; and/or,
   the coupling agent is selected from silane coupling agents; preferably, the coupling agent is selected from trialkoxysilane coupling agents; further preferably, the coupling agent is selected from at least one of phenyltrimethoxysilane, phenyltriethoxysilane, γ-mercaptopropyltriethoxysilane, methyltriethoxysilane, and γ-aminopropyltriethoxysilane.
11. The UV adhesive containing a lignin-based acrylate prepolymer according to embodiment 7, characterized in that:
   the auxiliary agent is selected from at least one of a co-initiator, a stabilizer, and an inhibitor; preferably,
   the co-initiator is selected from at least one of iso-octyl p-dimethylaminobenzoate, diethanolamine, and triethanolamine; and/or,
   the stabilizer is selected from at least one of borate esters and organic acids; and/or,
   the inhibitor is selected from at least one of hydroquinone, tert-butylcatechol, p-methoxyphenol, and benzoquinone;
   further preferably, the stabilizer is selected from at least one of trimethyl borate, triethyl borate, tri-n-propyl borate, tri-iso-propyl borate, tri-o-tolyl borate, tri-m-benzyl borate, barbituric acid, salicylic acid, lauric acid, fumaric acid, and benzoic acid.
12. A method for preparing the UV adhesive containing a lignin-based acrylate prepolymer according to any one of embodiments 7-11, characterized in that, it comprises steps of:
   mixing starting materials including a monomer, a photoinitiator, a composite prepolymer, a coupling agent, and an auxiliary agent under vacuum and in absence of light to react, to prepare the UV adhesive containing a lignin-based acrylate prepolymer.
13. The method for preparing the UV adhesive containing a lignin-based acrylate prepolymer according to embodiment 12, characterized in that:
   starting materials including the monomer, the composite prepolymer, the coupling agent, the stabilizer, and the inhibitor are added first and mixed, then the photoinitiator and co-initiator are added and reacted under vacuum stirring conditions in absence of light;
   preferably,
   the reaction in absence of light is carried out at a vacuum degree ranging from -0.01 MPa to -0.1 MPa;
   the reaction in absence of light is carried out for a time ranging from 1 to 2 hours;
   the stirring speed ranges from 400 to 600 revolutions per minute.
14. Use of the UV adhesive containing a lignin-based acrylate prepolymer according to any one of embodiments 7-11 in bonding for optoelectronic devices, building materials, and medical materials.

To facilitate understanding of the present disclosure, the present disclosure provides examples as follows. However, these examples are only for helping to understand the present disclosure and should not be considered as specific limitations on the present disclosure.

### Examples

The present disclosure is specifically described below in conjunction with specific examples. It is necessary to note that the following examples are only for further illustrating the present disclosure and should not be construed as limiting the scope of protection of the present disclosure. Non-essential improvements and adjustments made by those skilled in the art based on the content of the present disclosure still fall within the scope of protection of the present disclosure.

The present disclosure will be described in detail below through examples. Unless otherwise specified, the methods used were conventional methods. Unless otherwise specified, the reagents used were commercially available with analytical purity. Room temperature refers to about 25°C. Various acrylate monomers and their synthesis reagents were purchased from Innochem. Kraft lignin was purchased from Aladdin.

The polyurethane acrylate prepolymers used were commercial polyurethane acrylates Etercure 6164 L and Etercure 615-100, wherein Etercure 615-100 was purchased from Eternal Materials Co., Ltd., with a viscosity of 10000-20000 mPa·s (25°C); Etercure 6164 L was purchased from Eternal Materials Co., Ltd., with a viscosity of 15000-23000 mPa·s (25°C).

### Characterization Methods:

Molecular weight: Waters 1515 gel permeation chromatograph from Waters, USA was used; temperature: 60°C; calibrated with polymethyl methacrylate standards; eluent: N,N-dimethylformamide.

Viscosity: Brookfield-RVT dial-reading rotational viscometer, test temperature: 25°C, measured at 20 rpm.

Nuclear magnetic resonance (¹H NMR) test: Bruker Avance 500 MHz nuclear magnetic resonance spectrometer from Bruker, Germany, was used to test the samples. The samples were dissolved in Acetone-*d*₆ or DMSO-*d*₆.

Infrared test: Bruker INVENIO Fourier transform infrared spectrometer from Bruker, Germany was used to test the samples. Scanning range: 500-4000 cm⁻¹, resolution: 4 cm⁻¹, number of scans: 32.

The methacrylated lignin and its preparation method can be referred to the paper "Ultraviolet Curable Coatings of Modified Lignin" by Soheil Hajirahimkhan, et al., ACS Sustainable Chem. Eng. 2018, 6, 14685-14694. The entity of this literature is incorporated herein by reference as part of the present disclosure. The allylated gallic acid trimethacrylate and its preparation method can be referred to the paper "Bio-based tetrafunctional crosslink agent from gallic acid and its enhanced soybean oil-based UV-cured coatings with high performance" by Songqi Ma, et al., RSC Adv., 2014, 4, 23036-23042. The entity of this literature is incorporated herein by reference as part of the present disclosure.

In the examples of the present disclosure, the acrylic-functionalized lignin used was prepared in the following manner:
Preparation of methacrylated lignin: Dried kraft lignin (2 g, M_{w} ≈ 5000 g/mol) was added to a round-bottom flask containing 20 mL of tetrahydrofuran (THF), stirred for 5 minutes (800 rpm), then 0.2 mg of 1-methylimidazole (1MIM) and 1.68 g of methacrylic anhydride were added. The mixture was stirred at 60 °C under nitrogen atmosphere for 60 minutes. Subsequently, the resulting brown mixture was dripped into n-hexane (150 mL), then stirred, precipitated, and filtered to obtain a light brown powder. The obtained powder was then dissolved in dichloromethane (20 mL) and washed three times with deionized water to remove the catalyst and unreacted starting materials. The organic phase was then subjected to precipitation in n-hexane (150 mL). The resulting powder was vacuum-dried to obtain methacrylated lignin. The reaction scheme is as follows:

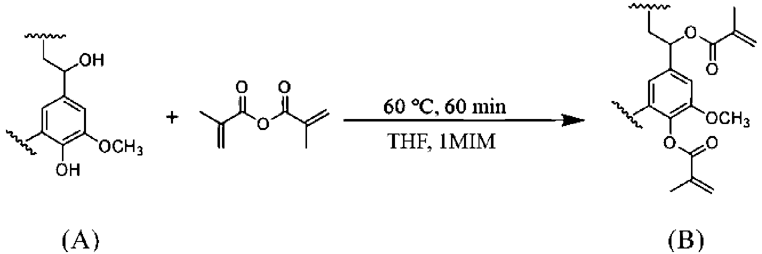

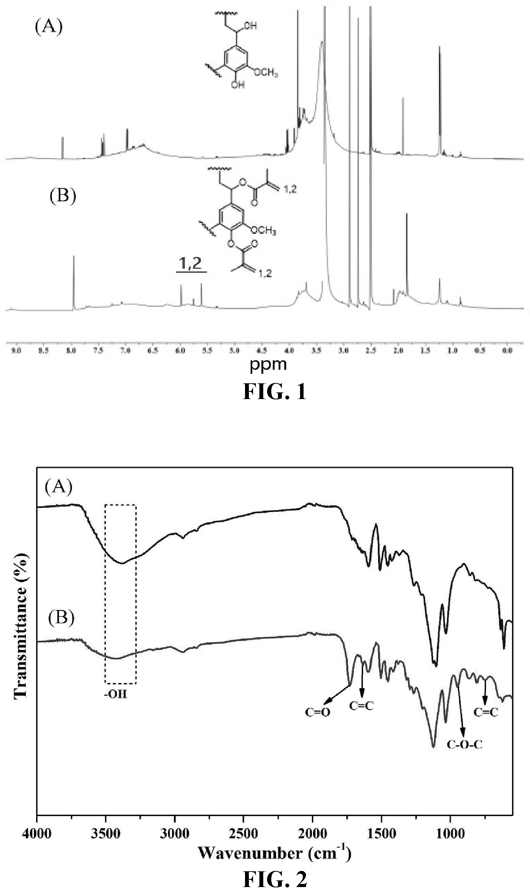

The ¹H NMR spectra of kraft lignin (A) and methacrylated lignin (B) are shown in Figure 1, and the FT-IR spectra are shown in Figure 2.

In the examples of the present disclosure, the polyfunctional gallate used was prepared in the following manner:
Preparation of allylated gallic acid triacrylate: 10.2 g of gallic acid, 14.52 g of allyl bromide, 200 g of acetone, and 36.48 g of potassium carbonate were added to a three-necked flask. After vigorous stirring at room temperature for 10 minutes (800 rpm), the mixture was heated to 60 °C and refluxed for 2 hours. After cooling to room temperature, 17.92 g of acryloyl chloride was added dropwise over 30 minutes. The mixture was heated to 40 °C and reacted for 12 hours. Subsequently, unreacted starting materials and acetone were removed by rotary evaporation to obtain allylated gallic acid triacrylate. The reaction scheme is as follows:

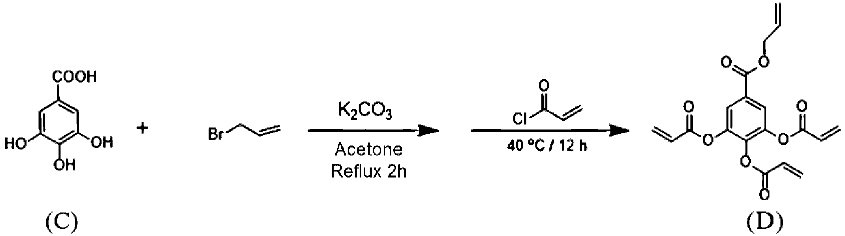

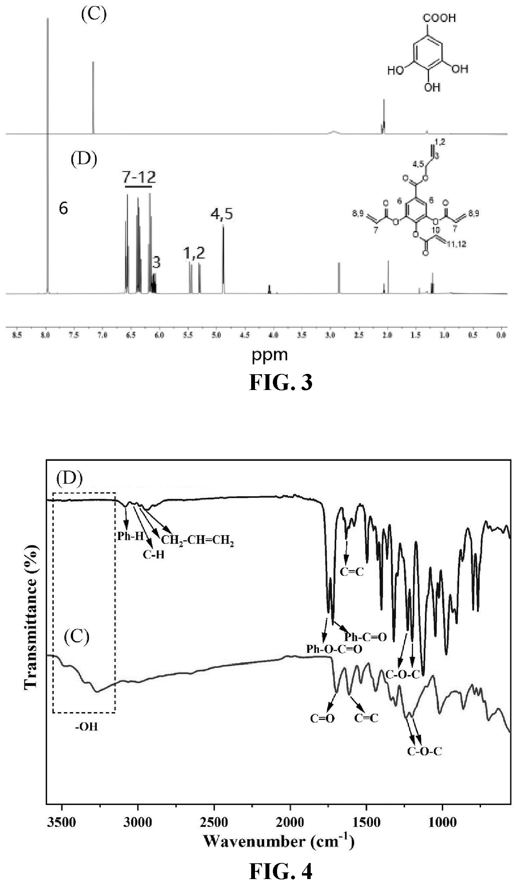

The ¹H NMR spectra of gallic acid (C) and allylated gallic acid triacrylate (D) are shown in Figure 3, and the FT-IR spectra are shown in Figure 4.

### Preparation Example 1

### Preparation of Lignin-Based Acrylate Prepolymer:

90 parts of methacrylated lignin and 6 parts of allylated gallic acid triacrylate were added to a reactor and mixed. Then, 3 parts of azobis(isobutyronitrile) and 1 part of triethanolamine were added. The mixture was stirred under a vacuum of -0.01 MPa at a stirring speed of 500 rpm for 1 hour until uniform. It was then slowly heated to 60°C and stirred at constant temperature for 2 hours to obtain a viscous liquid, which was discharged.

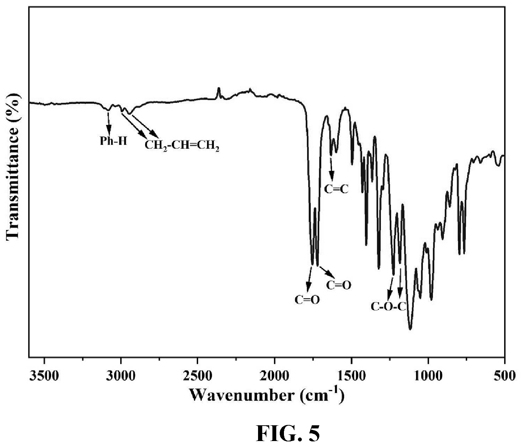

The lignin-based acrylate prepolymer obtained in Preparation Example 1 had a viscosity of 42800 mPa·s and a weight-average molecular weight M_{w} of 223468 g/mol. The FT-IR spectrum is shown in Figure 5.

### Preparation of Composite Prepolymer 1:

66 parts of the prepared lignin-based acrylate prepolymer and 33 parts of Etercure 6164 L were uniformly mixed. 1 part of hydroquinone was added, and the mixture was stirred in absence of light for 1 hour to obtain composite prepolymer **1.**

### Preparation Example 2

### Preparation of Lignin-Based Acrylate Prepolymer:

90 parts of methacrylated lignin and 6 parts of allylated gallic acid triacrylate were added to a reactor and mixed. Then, 3 parts of azobis(isoheptanonitrile) and 1 part of triethanolamine were added. The mixture was stirred under a vacuum of -0.02 MPa at a stirring speed of 400 rpm for 2 hours until uniform. It was then slowly heated to 55°C and stirred at constant temperature for 3 hours to obtain a viscous liquid, which was discharged.

The lignin-based acrylate prepolymer obtained in Preparation Example 2 had a viscosity of 40500 mPa·s and a weight-average molecular weight M_{w} of 204837 g/mol.

### Preparation of Composite Prepolymer 2:

49 parts of the prepared lignin-based acrylate prepolymer and 49 parts of Etercure 6164 L were uniformly mixed. 2 parts of tert-butylcatechol were added, and the mixture was stirred in absence of light for 2 hours to obtain composite prepolymer **2.**

### Preparation Example 3

### Preparation of Lignin-Based Acrylate Prepolymer:

90 parts of methacrylated lignin and 6 parts of allylated gallic acid triacrylate were added to a reactor and mixed. Then, 2 parts of benzoyl peroxide and 2 parts of triethanolamine were added. The mixture was stirred under a vacuum of -0.01 MPa at a stirring speed of 500 rpm for 1 hour until uniform. It was then slowly heated to 60°C and stirred at constant temperature for 2 hours to obtain a viscous liquid, which was discharged.

The lignin-based acrylate prepolymer obtained in Preparation Example 3 had a viscosity of 41500 mPa·s and a weight-average molecular weight M_{w} of 212347 g/mol.

### Preparation of Composite Prepolymer 3:

39 parts of the prepared lignin-based acrylate prepolymer and 59 parts of Etercure 615-100 were uniformly mixed. 2 parts of p-methoxyphenol were added, and the mixture was stirred in absence of light for 1 hour to obtain composite prepolymer **3.**

### Preparation Example 4

### Preparation of Lignin-Based Acrylate Prepolymer:

90 parts of methacrylated lignin and 6 parts of allylated gallic acid triacrylate were added to a reactor and mixed. Then, 2 parts of methyl ethyl ketone peroxide and 2 parts of triethanolamine were added. The mixture was stirred under a vacuum of -0.02 MPa at a stirring speed of 400 rpm for 2 hours until uniform. It was then slowly heated to 60°C and stirred at constant temperature for 2 hours to obtain a viscous liquid, which was discharged.

The lignin-based acrylate prepolymer obtained in Preparation Example 4 had a viscosity of 41700 mPa·s and a weight-average molecular weight M_{w} of 216539 g/mol.

### Preparation of Composite Prepolymer 4:

33 parts of the prepared lignin-based acrylate prepolymer and 66 parts of Etercure 615-100 were uniformly mixed. 2 parts of benzoquinone were added, and the mixture was stirred in absence of light for 2 hours to obtain composite prepolymer **4**.

### Preparation Example 5

The formulation of Preparation Example 1 was used, except that the amount of methacrylated lignin in the formulation was adjusted to 80 parts and the amount of allylated gallic acid triacrylate was adjusted to 16 parts; composite prepolymer **5** was obtained using the same preparation method.

### Preparation Example 6

The formulation of Preparation Example 1 was used, except that the amount of methacrylated lignin in the formulation was adjusted to 86 parts and the amount of allylated gallic acid triacrylate was adjusted to 10 parts; composite prepolymer **6** was obtained using the same preparation method.

### Preparation Example 7

The formulation of Preparation Example 1 was used, except that the amount of methacrylated lignin in the formulation was adjusted to 91 parts and the amount of allylated gallic acid triacrylate was adjusted to 5 parts; composite prepolymer **7** was obtained using the same preparation method.

### Example 1

100 parts of acrylic (acrylate) functional monomers (containing 50 parts of methyl methacrylate (MMA), 10 parts of methacrylic acid (MAA), 17 parts of butyl acrylate (BA), 15 parts of hydroxyethyl methacrylate (HEMA), 8 parts of trifluoroethyl methacrylate (TFEMA)), 22 parts of composite prepolymer **1**, 5 parts of phenyltrimethoxysilane, 2 parts of trimethyl borate, and 2 parts of tert-butylcatechol were added to a reactor and mixed at a speed of 300 rpm for 30 minutes. Then, 4 parts of anisoin methyl ether and 3 parts of iso-octyl p-dimethylaminobenzoate were added. Under a vacuum of -0.02 MPa and at a stirring speed of 400 rpm, the mixture was mechanically stirred at room temperature in absence of light for 1 hour to obtain the adhesive sample of Example 1.

### Example 2

100 parts of acrylic (acrylate) functional monomers (containing 50 parts of ethyl methacrylate (EMA), 8 parts of acrylic acid (AA), 17 parts of iso-octyl acrylate (2-EHA), 15 parts of hydroxypropyl methacrylate (HPMA), 10 parts of methyl cyanoacrylate (MCA)), 24 parts of composite prepolymer **2,** 1 part of propyltriethoxysilane, 3 parts of triethyl borate, and 2 parts of hydroquinone were added to a reactor and mixed at a speed of 300 rpm for 30 minutes. Then, 4 parts of anisoin ethyl ether and 3 parts of diethanolamine were added. Under a vacuum of -0.03 MPa and at a stirring speed of 500 rpm, the mixture was mechanically stirred at room temperature in absence of light for 1 hour to obtain the adhesive sample of Example 2.

### Example 3

100 parts of acrylic (acrylate) functional monomers (containing 54 parts of butyl methacrylate (BMA), 8 parts of methacrylic acid (MAA), 18 parts of glycidyl acrylate (GA), 15 parts of hydroxypropyl acrylate (HPA), 5 parts of tripropylene glycol diacrylate (TPGDA)), 19 parts of composite prepolymer **3,** 4 parts of γ-mercaptopropyltriethoxysilane, 2 parts of tri-n-propyl borate, and 2 parts of p-methoxyphenol were added to a reactor and mixed at a speed of 300 rpm for 30 minutes. Then, 4 parts of anisoin butyl ether and 3 parts of diethanolamine were added. Under a vacuum of -0.02 MPa and at a stirring speed of 600 rpm, the mixture was mechanically stirred at room temperature in absence of light for 1 hour to obtain the adhesive sample of Example 3.

### Example 4

100 parts of acrylic (acrylate) functional monomers (containing 47 parts of ethyl methacrylate (EMA), 16 parts of acrylic acid (AA), 18 parts of butyl acrylate (BA), 10 parts of hydroxypropyl acrylate (HPA), 9 parts of tripropylene glycol diacrylate (TPGDA)), 25 parts of composite prepolymer **4,** 3 parts of methyltriethoxysilane, 1 part of tri-iso-propyl borate, and 2 parts of benzoquinone were added to a reactor and mixed at a speed of 300 rpm for 30 minutes. Then, 4 parts of benzil and 3 parts of triethanolamine were added. Under a vacuum of -0.02 MPa and at a stirring speed of 400 rpm, the mixture was mechanically stirred at room temperature in absence of light for 2 hours to obtain the adhesive sample of Example 4.

### Example 5

100 parts of acrylic (acrylate) functional monomers (containing 47 parts of methyl methacrylate (MMA), 10 parts of methacrylic acid (MAA), 19 parts of iso-octyl acrylate (2-EHA), 14 parts of hydroxypropyl methacrylate (HPMA), 10 parts of ethyl cyanoacrylate (ECA)), 15 parts of composite prepolymer **1**, 2 parts of γ-aminopropyltriethoxysilane, 2 parts of barbituric acid, and 1 part of tert-butylcatechol were added to a reactor and mixed at a speed of 300 rpm for 30 minutes. Then, 3 parts of dimethoxyacetophenone and 2 parts of iso-octyl p-dimethylaminobenzoate were added. Under a vacuum of -0.01 MPa and at a stirring speed of 500 rpm, the mixture was mechanically stirred at room temperature in absence of light for 2 hours to obtain the adhesive sample of Example 5.

### Example 6

100 parts of acrylic (acrylate) functional monomers (containing 59 parts of butyl methacrylate (BMA), 8 parts of acrylic acid (AA), 15 parts of glycidyl acrylate (GA), 8 parts of hydroxyethyl methacrylate (HEMA), 10 parts of trifluoroethyl methacrylate (TFEMA)), 40 parts of composite prepolymer **2**, 3 parts of phenyltrimethoxysilane, 1 part of lauric acid, and 1 part of hydroquinone were added to a reactor and mixed at a speed of 300 rpm for 30 minutes. Then, 3 parts of 2-hydroxy-2-methyl-1-phenyl-1-propanone and 2 parts of iso-octyl p-dimethylaminobenzoate were added. Under a vacuum of - 0.03 MPa and at a stirring speed of 600 rpm, the mixture was mechanically stirred at room temperature in absence of light for 2 hours to obtain the adhesive sample of Example 6.

### Example 7

A scheme substantially the same as Example 4 was used, except that composite prepolymer **5** was used in the formulation instead of composite prepolymer **4**. The same preparation method was used for mixing until uniform to obtain the adhesive sample of Example 7.

### Example 8

A scheme substantially the same as Example 4 was used, except that composite prepolymer **6** was used in the formulation instead of composite prepolymer **4**. The same preparation method was used for mixing until uniform to obtain the adhesive sample of Example 8.

### Example 9

A scheme substantially the same as Example 4 was used, except that composite prepolymer **7** was used in the formulation instead of composite prepolymer **4**. The same preparation method was used for mixing until uniform to obtain the adhesive sample of Example 9.

### Comparative Example 1

A scheme substantially the same as Example 1 was used, except that all the prepolymers used in the formulation were replaced with polyurethane acrylate prepolymer (Etercure 6164 L). The same preparation method was used for mixing until uniform to obtain the adhesive sample of Comparative Example 1.

### Comparative Example 2

A scheme substantially the same as Example 1 was used, except that all the prepolymers used in the formulation were replaced with lignin-based acrylate prepolymer. The same preparation method was used for mixing until uniform to obtain the adhesive sample of Comparative Example 2.

### Comparative Example 3

A scheme substantially the same as Example 1 was used, except that no coupling agent was added in the formulation. The same preparation method was used for mixing until uniform to obtain the adhesive sample of Comparative Example 3.

### Comparative Example 4

A scheme substantially the same as Example 1 was used, except that the crosslinking agent used in the preparation of the lignin-based acrylate prepolymer in the formulation was tetra(ethylene glycol) diacrylate (TEGDA, with a structure as follows). The same preparation method was used for mixing until uniform to obtain the adhesive sample of Comparative Example 4.

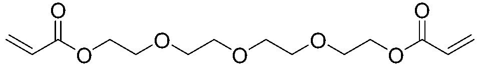

### Performance Tests:

The adhesive samples from the Examples and Comparative Examples were tested as follows:
(1) Viscosity: determined by using a Brookfield-RVT dial-reading rotational viscometer at a test temperature of 25°C and a condition of 20 rpm.
(2) Tensile bond strength: tested according to the ASTM D1623 method.
(3) Linear curing shrinkage: tested according to the ISO 2577 method. The length change of a fixed-length adhesive film before and after curing was measured. The reduction value divided by the original value gives the shrinkage rate.
(4) Adhesion: tested according to the GB/T 9286-1998 method. Results are graded from 0 to 5, with 0 being the best and 5 being the worst.
(5) Flexibility: tested according to GB/T 1731-1993 "Determination of flexibility of films".
(6) Chemical resistance: an adhesive film with a dry film thickness of 60 µm was prepared, placed in a 100 °C oven to dry for 1 day, and then immersed in a 50% ethanol solution for 12 h. The film was observed for whitening, softening, or tackiness. If the film remained unchanged, it passed the chemical resistance test. If whitening, softening, or tackiness occurred, it did not pass.

The above tests were repeated three times, and the average values were taken.

The performance parameter measurement results of each Example (Ex.) and Comparative Example (CE.) are shown in Table 1 below.

**Table 1**

| Name | Viscosity /mPa·s | Tensile bond strength/Mpa | Linear curing shrinkage/% | Adhesion /grade | Flexibility /mm | Chemical resistance |
|---|---|---|---|---|---|---|
| Ex. 1 | 4200 | 44.9 | 1.7 | 0 | 1 | Pass |
| Ex. 2 | 4600 | 42.7 | 1.5 | 0 | 1 | Pass |
| Ex. 3 | 3500 | 40.4 | 1.8 | 1 | 1 | Pass |
| Ex. 4 | 4500 | 43.1 | 1.6 | 0 | 1 | Pass |
| Ex. 5 | 3300 | 38.5 | 1.9 | 0 | 1 | Pass |
| Ex. 6 | 5700 | 36.7 | 1.3 | 1 | 2 | Pass |
| Ex. 7 | 3800 | 39.5 | 1.8 | 1 | 2 | Pass |
| Ex. 8 | 4200 | 41.1 | 1.7 | 0 | 1 | Pass |
| Ex. 9 | 5200 | 44.1 | 1.7 | 1 | 1 | Pass |
| CE. 1 | 2900 | 33.8 | 2.4 | 1 | 1 | Slightly whitened |
| CE. 2 | 5500 | 42.2 | 1.3 | 1 | 2 | Pass |
| CE. 3 | 4300 | 42.0 | 1.8 | 1 | 1 | Slightly whitened |
| CE. 4 | 3800 | 39.0 | 2.0 | 1 | 1 | Pass |

Comparison between Comparative Example 1 and Example 1 shows that the Example where the lignin-based acrylate prepolymer was incorporated in the composite prepolymer exhibited higher tensile bond strength and lower linear curing shrinkage. This is mainly because the polyfunctional methacrylated lignin, after reacting with the gallic acid-based crosslinking agent, formed an interpenetrating cross-linked network structure, greatly increasing the density of the bonding system, enhancing the intramolecular cohesive force, thus resulting in higher bond strength, lower shrinkage, better stability, and better adhesion.

Comparison among Comparative Example 1, Comparative Example 2, and Example 1 shows that the adhesive system prepared using the composite prepolymer obtained by mixing the polyurethane acrylate prepolymer and the lignin-based acrylate prepolymer in a certain ratio achieved an overall performance balance of high bond strength, low shrinkage, good adhesion, flexibility, and chemical resistance simultaneously, compared to adhesive systems prepared using only the polyurethane acrylate prepolymer or only the lignin-based acrylate prepolymer. Comparison between Comparative Example 3 and Example 1 shows that the addition of the coupling agent could further improve the bonding effect of the adhesive system. Comparison between Comparative Example 4 and Example 1 shows that when the prepolymer obtained using the polyfunctional gallate crosslinking agent according to the present disclosure was used in the adhesive system, the performances in terms of bond strength, curing shrinkage, and adhesion were all improved compared to the adhesive system based on the prepolymer obtained using the TEGDA crosslinking agent. The adhesive system according to the present disclosure not only achieves efficient utilization of the biomass resource (lignin), reducing costs, but also improves the performance of the bio-based acrylate adhesive system, promoting the green and sustainable development in the field of adhesive applications.

The preferable embodiments of the present application have been described in detail above. However, the present application is not limited to the specific details in the above embodiments. Within the technical concept of the present application, various simple modifications can be made to the technical solutions of the present application, and these simple modifications all belong to the scope of protection of the present application.

It should also be noted that the various specific technical features described in the above specific embodiments can be combined in any suitable manner without contradiction. To avoid unnecessary repetition, the present application will not further describe the various possible combinations.

Furthermore, the various different embodiments of the present application can also be combined arbitrarily, as long as they do not contradict the idea of the present application. They should also be considered as the content disclosed by the present application.

## Claims

1. A lignin-based acrylate prepolymer, comprising a crosslinked backbone and linking groups connecting said crosslinked backbone, wherein said crosslinked backbone comprises polymerized structural units derived from at least one acrylic-functionalized lignin, and said linking groups are derived from at least one polyfunctional gallate having at least three terminal vinyl groups;
wherein said acrylic-functionalized lignin contains structural fragments as follows: 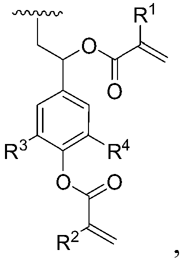
wherein R¹ and R² each independently represent H or C1-2 alkyl; R³ and R⁴ each independently represent H, -OCH₃, or a linking bond connected to other structural fragments of said acrylic-functionalized lignin.

2. The lignin-based acrylate prepolymer according to claim 1, wherein said polyfunctional gallate is selected from at least one of gallic acid triacrylate, gallic acid trimethacrylate, allylated gallic acid triacrylate, and allylated gallic acid trimethacrylate; preferably, said polyfunctional gallate is a tetrafunctional gallate, preferably having the following structure: 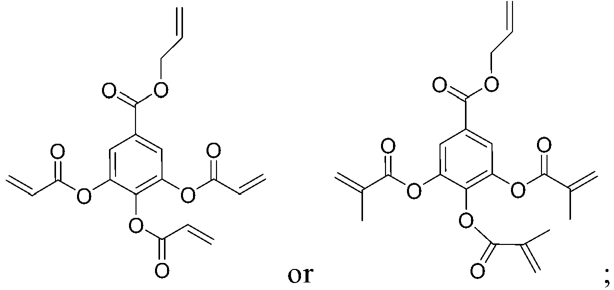 and/or
wherein said lignin is selected from at least one of alkali lignin, lignosulfonate, kraft lignin, sulfonated alkali lignin, and aminated alkali lignin.

3. The lignin-based acrylate prepolymer according to claim 1 or 2,
wherein with respect to the total weight of said lignin-based acrylate prepolymer as 100 wt%,
the structural units derived from said acrylic-functionalized lignin is present in an amount ranging from 72 wt% to 93 wt%, preferably from 80 wt% to 91 wt%,
the groups derived from said polyfunctional gallate is present in an amount ranging from 5 wt% to 20 wt%, preferably from 5 wt% to 16 wt%; and/or
wherein said lignin-based acrylate prepolymer has a viscosity ranging from 5000 to 50000 mPa·s, preferably from 10000 to 45000 mPa·s; and/or
wherein said lignin-based acrylate prepolymer has a weight-average molecular weight ranging from 40000 to 250000 g/mol.

4. A method for preparing a lignin-based acrylate prepolymer, preferably a method for preparing the lignin-based acrylate prepolymer according to any one of claims 1-3, comprising steps of:
mixing starting materials comprising at least one acrylic-functionalized lignin, at least one polyfunctional gallate having at least three terminal vinyl groups, a first initiator, and optionally a co-initiator under vacuum, followed by heating to carry out a reaction, to obtain said lignin-based acrylate prepolymer,
wherein said acrylic-functionalized lignin contains structural fragments as follows: 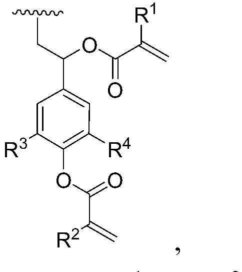
wherein R¹ and R² each independently represent H or C1-2 alkyl; R³ and R⁴ each independently represent H, -OCH₃, or a linking bond connected to other structural fragments of said acrylic-functionalized lignin.

5. The preparation method according to claim 4, **characterized in that**:
said polyfunctional gallate is selected from at least one of gallic acid triacrylate, gallic acid trimethacrylate, allylated gallic acid triacrylate, and allylated gallic acid trimethacrylate; preferably, said polyfunctional gallate is a tetrafunctional gallate, preferably having the following structure: 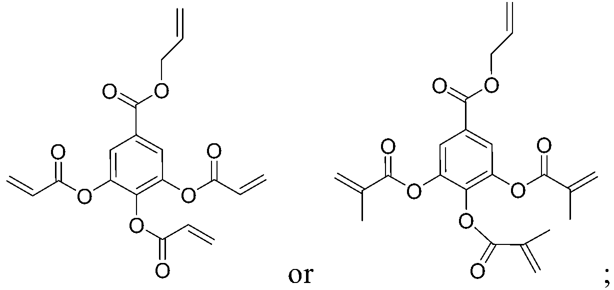 and/or
said first initiator is a thermal initiator, said thermal initiator is preferably selected from at least one of peroxide compounds and/or azo compounds, more preferably selected from at least one of azobis(isobutyronitrile), azobis(isoheptanonitrile), benzoyl peroxide, tert-butyl peroxybenzoate, and methyl ethyl ketone peroxide; and/or,
said co-initiator is selected from at least one of iso-octyl p-dimethylaminobenzoate, diethanolamine, and triethanolamine; and/or,
with respect to the total weight of said starting materials as 100 wt%,
said acrylic-functionalized lignin is used in an amount ranging from 72 wt% to 93 wt%, preferably from 80 wt% to 91 wt%;
said polyfunctional gallate is used in an amount ranging from 5 wt% to 20 wt%, preferably from 5 wt% to 16 wt%;
said first initiator is used in an amount ranging from 1 wt% to 5 wt%, preferably from 2 wt% to 4 wt%;
said co-initiator is used in an amount ranging from 0.5 wt% to 3 wt%, preferably from 1 wt% to 2 wt%; and/or
said reaction is carried out under one or more of the following conditions:
a reaction temperature ranging from 40 to 70°C;
a reaction time ranging from 0.5 h to 3 h; and
a vacuum degree ranging from -0.1 MPa to -0.005 MPa.

6. A composite prepolymer, **characterized by**, comprising a polyurethane acrylate prepolymer, a lignin-based acrylate prepolymer, and optionally an inhibitor; wherein, said lignin-based acrylate prepolymer is according to any one of claims 1-3 or obtained by the preparation method according to claim 4 or 5.

7. The composite prepolymer according to claim 6, **characterized in that**:
said polyurethane acrylate prepolymer has a viscosity ranging from 5000 to 40000 mPa·s, preferably from 10000 to 30000 mPa·s, and said lignin-based acrylate prepolymer has a viscosity ranging from 5000 to 50000 mPa·s, preferably from 10000 to 45000 mPa·s; and/or,
said inhibitor is selected from at least one of hydroquinone, tert-butylcatechol, p-methoxyphenol, and benzoquinone; and/or,
with respect to the total weight of said composite prepolymer as 100 wt%,
said lignin-based acrylate prepolymer is present in an amount ranging from 20 wt% to 77 wt%, preferably from 33 wt% to 66 wt%;
said polyurethane acrylate prepolymer is present in an amount ranging from 20 wt% to 77 wt%, preferably from 33 wt% to 66 wt%;
said inhibitor is present in an amount ranging from 0 wt% to 3 wt%, preferably from 1 wt% to 2 wt%; and/or,
the weight ratio of said lignin-based acrylate prepolymer to said polyurethane acrylate prepolymer ranges from 3.85:1 to 1:3.85, preferably from 2:1 to 1:2.

8. An adhesive composition, **characterized in that**:
said adhesive composition comprises a polymerizable monomer, a second initiator, the composite prepolymer according to any one of claims 6-7, a coupling agent, and optionally an auxiliary agent.

9. The adhesive composition according to claim 8, **characterized in that**:
the component contents in said adhesive composition are, in parts by weight:
polymerizable monomer: 100 parts;
second initiator: 1-6 parts;
composite prepolymer: 15-40 parts, preferably 19-35 parts;
coupling agent: 1-6 parts;
auxiliary agent: 0-10 parts, preferably 4-8 parts.

10. The adhesive composition according to claim 8 or 9, **characterized in that**:
said polymerizable monomer comprises at least one of acrylic acid monomers and acrylate monomers; preferably, said acrylic acid monomer is selected from at least one of acrylic acid and methacrylic acid, and/or, said acrylate monomer is selected from at least one of methyl methacrylate, ethyl methacrylate, butyl methacrylate, octyl methacrylate, hydroxyethyl methacrylate, hydroxypropyl methacrylate, butyl acrylate, iso-octyl acrylate, hydroxypropyl acrylate, glycidyl acrylate, tripropylene glycol diacrylate, trifluoroethyl methacrylate, methyl cyanoacrylate, ethyl cyanoacrylate, hydroxyethyl cyanoacrylate, and hydroxypropyl cyanoacrylate; and/or,
said second initiator is a photoinitiator; preferably, said photoinitiator is selected from at least one of anisoin methyl ether, anisoin ethyl ether, anisoin butyl ether, benzil, diethylamino benzil, benzophenone sulfonates, dialkoxyacetophenones, α-hydroxyalkyl phenones and α-amino ketone compounds, benzophenone, and thioxanthone; preferably, said α-amino ketone compound is selected from at least one of 2-benzyl-2-dimethylamino-1-(4-morpholinophenyl)-1-butanone and 2-methyl-1-(4-methylthiophenyl)-2-morpholino-1-propanone; and/or,
said coupling agent is selected from silane coupling agents; preferably, said silane coupling agent is selected from trialkoxysilane coupling agents; more preferably, said silane coupling agent is selected from at least one of phenyltrimethoxysilane, phenyltriethoxysilane, γ-mercaptopropyltriethoxysilane, methyltriethoxysilane, and γ-aminopropyltriethoxysilane.

11. The adhesive composition according to any one of claims 8-10, **characterized in that**:
said auxiliary agent is selected from at least one of a co-initiator, a stabilizer, and an inhibitor;
preferably,
said co-initiator is selected from at least one of iso-octyl p-dimethylaminobenzoate, diethanolamine, and triethanolamine; and/or,
said stabilizer is selected from at least one of borate esters and organic acids, preferably selected from at least one of trimethyl borate, triethyl borate, tri-n-propyl borate, tri-iso-propyl borate, tri-o-tolyl borate, tri-m-benzyl borate, barbituric acid, salicylic acid, lauric acid, fumaric acid, and benzoic acid; and/or,
said inhibitor is selected from at least one of hydroquinone, tert-butylcatechol, p-methoxyphenol, and benzoquinone.

12. A method for preparing the adhesive composition according to any one of claims 8-11, **characterized by**, comprising steps of:
a) mixing a polyurethane acrylate prepolymer, a lignin-based acrylate prepolymer, and optionally an inhibitor in absence of light to obtain a composite prepolymer;
b) mixing a polymerizable monomer, a second initiator, the composite prepolymer, a coupling agent, and optionally an auxiliary agent under vacuum and in absence of light to obtain said adhesive composition.

13. The preparation method according to claim 12, **characterized in that**, said method is carried out under one or more of the following conditions:
a vacuum degree ranging from -0.1 MPa to -0.005 MPa;
a mixing time ranging from 1 to 2 hours;
a stirring speed for mixing ranging from 300 to 600 rpm.

14. Use of the adhesive composition according to any one of claims 8-11 in bonding for optoelectronic devices, building materials, and medical materials.
